# EUROPEAN PATENT SPECIFICATION

(11) **EP 4 085 984 B1**
(45) Date of publication and mention of the grant of the patent: **13.03.2024**
(21) Application number: 21172642.7
(22) Date of filing: 07.05.2021
(51) Int. Cl.: B01D 29/11, B01D 35/143, B01D 35/147

(54) **FILTER ASSEMBLY FOR WASTE FLUID DISCHARGED BY A HOUSEHOLD APPLIANCE**
FILTERANORDNUNG FÜR ABFALLFLÜSSIGKEIT, DIE DURCH EIN HAUSHALTSGERÄT ABGEGEBEN WIRD
ENSEMBLE FILTRANT POUR FLUIDE RÉSIDUEL ÉVACUÉ PAR UN APPAREIL MÉNAGER

(43) Date of publication of application: 09.11.2022
(73) Proprietor: ELECTROLUX APPLIANCES AKTIEBOLAG, 105 45 Stockholm (SE)
(72) Inventor: MAIERO, Marco, 33080 Porcia (IT); DE GIUSTI, Federico, 33080 Porcia (IT)
(74) Representative: Electrolux Group Patents

(56) References cited:
- EP-A1- 2 325 378
- WO-A1-2021/070103
- DE-A1-102017 215 132

## Description

### FIELD OF THE INVENTION

The present invention concerns the field of filtering contaminants from a waste fluid discharged by a household appliance, in particular filtering of waste fluid discharged by a laundry washing machine.

### BACKGROUND ART

Conventionally, filter assemblies may be used to filter the waste fluid discharged by household appliances, in particular by laundry treating machines such as washing machines or combined laundry washing/drying machines, in order to reduce the environmental impact in terms of reduction of contaminants contained in the waste fluid.

DE 10 2017 215 132 A1, WO 2021/070103 A1 and EP 2 325 378 A1 disclose filter assemblies for filtering a waste fluid discharged by a household appliance like a washing machine.

With contaminants it has to be intended any material that is mixed to the washing water and that includes, typically, dirt and stains removed from laundry/clothes and/or elements released by the clothes themselves during the washing treatment. Among others, microplastic elements released by clothes during washing treatment have a relevant environmental impact. Therefore, the use of filter assemblies is of particular concern to avoid discharging of said microplastic elements.

According to known systems, the machine is provided with a waste fluid draining hose that extends outside the machine and that is connectable to a drainage point arranged outside the machine and which is generally located nearby the place where the machine is installed. A filter assembly is then typically associated to the draining hose, more preferably connected to the draining hose outlet. The filter assembly hence preferably comprises an inlet port connected to the draining hose outlet and an outlet port connected to the drainage point.

Filter assemblies of known type comprise a cylindrical filter element and a filter housing enclosing the filter element. The waste fluid coming from the inlet port enters the housing and passes through the filter element. The filter element restricts the passage of contaminants with predetermined size from flowing therethrough and the filtered fluid is conveyed to the outlet port.

As known, over time the clogging level of the filter element increases and cleaning or replacing operations are required before, or as soon as, the filter element becomes fully clogged.

The use of filtering systems of the known art poses some drawbacks.

One drawback of the known filtering system arises when cleaning or replacing operations are not carried out in due time and the filter element gets fully clogged. The flow of the waste fluid is thus interrupted, and this may cause a functional fault or failure of the machine or, worst, fluid from the filter assembly may overflow and falling on the floor flooding the room.

The object of the present invention is therefore to overcome the drawbacks posed by the known techniques.

It is an object of the invention to provide a filtering system for waste fluid discharged by household appliances that avoids functional fault or failure of the machine to which is being connected.

It is another object of the invention to provide a filtering system for waste fluid discharged by household appliances that helps/simplifies maintenance operations.

It is a further object of the invention to provide a safer filtering system for waste fluid discharged by household appliances compared to known systems.

### DISCLOSURE OF INVENTION

The applicant has found that by providing a filter assembly for filtering a waste fluid discharged by a household appliance, wherein said filter assembly comprises a filter element defining an unfiltered area receiving said waste fluid, a filter housing receiving said filter element, wherein an outlet chamber is defined between said filter element and said filter housing for receiving fluid passing through said filter element and an outlet for expelling filtered fluid to a drain and by providing a support for said filter element having a first flooding area and a second flooding area separated from said first flooding area wherein said first flooding area is fluidly connected to said unfiltered area through a valve and wherein said second flooding area is apt to receive unfiltered waste fluid that overflows said first flooding and wherein said second flooding area comprises at least one aperture configured to allow unfiltered waste fluid to flow towards said outlet, it is possible to avoid functional fault or failure of the appliance to which the filter assembly is being connected.

According to one aspect of the present disclosure there is provided a filter assembly for filtering a waste fluid discharged by a household appliance, said filter assembly comprising:
- a filter element defining an unfiltered area receiving said waste fluid;
- a filter housing receiving said filter element, wherein an outlet chamber is defined between said filter element and said filter housing for receiving fluid passing through said filter element and coming from said unfiltered area;
- a support for said filter element;
- an inlet through which said waste fluid is supplied to said unfiltered area;
- an outlet fluidly connected to said outlet chamber, through which the waste fluid flows from said outlet chamber to a drain;

wherein said support comprises a first wall defining a first flooding area and a second flooding area separated from said first flooding area by said first wall; wherein said first flooding area is fluidly connected to said unfiltered area through a valve configured to allow unfiltered waste fluid to flow from said unfiltered area to said first flooding area;
wherein said second flooding area is apt to receive unfiltered waste fluid coming from said first flooding area by overflowing said first wall and wherein said second flooding area comprises at least one aperture configured to allow unfiltered waste fluid to flow towards said outlet.

Advantageously, in case the filter element becomes fully clogged, the waste fluid cannot pass through the mesh of the filter element and, consequently, fills the unfiltered area and push up the valve to bring it in an open position, so that the waste fluid is conveyed from the unfiltered area to the first flooding area. The waste fluid fills the first flooding area and then flows into the second flooding area. From the second flooding area, the waste fluid falls into the outlet chamber through said at least one aperture. The waste fluid is finally expelled to the outside through the outlet. The filter assembly of the invention, therefore, guarantees a by-pass function for the waste fluid in case of clogged filter. Preferably, said at least one aperture is realized between the second flooding area and the outlet chamber.

In a preferred embodiment, the support comprises a second wall arranged in the first flooding area, wherein at least part of the first wall and the second wall define a third flooding area separated from the first and the second flooding areas and wherein the third flooding area is apt to receive unfiltered waste fluid coming from the first flooding area by overflowing the second wall.

According to a preferred embodiment of the invention, the support comprises a floating element housed in the third flooding area.

Preferably, the floating element is configured to be lifted when unfiltered waste fluid coming from the first flooding area overflows the second wall and fills the third flooding area.

Advantageously, in case the filter element becomes fully clogged, the valve opens and the waste fluid is conveyed from the unfiltered area to the first flooding area, the second flooding area and the third flooding area. The waste fluid is then expelled to the outside, as said above, and at the same time the floating element is lifted.

In a preferred embodiment, the filter housing comprises a window configured to make the floating element visible from outside when lifted so as to indicate a clogging condition of the filter element.

Advantageously, a user is informed about the clogging status of the filter element and induced to clean or replace the filter element.

According to a preferred embodiment of the invention, the first wall defines a first overflowing level for the waste fluid that overflows the first wall and the second wall defines a second overflowing level for the waste fluid that overflows the second wall.

Preferably, the second overflowing level is lower than the first overflowing level. Advantageously, the floating element is lifted before the waste fluid reaches the second flooding area. The user is thus promptly informed about the clogging status of the filter element.

In a preferred embodiment, the first wall comprises at least one vent aperture through which unfiltered waste fluid can flow from the first flooding area to the second flooding area before the waste fluid overflows the first wall and the second wall.

According to a preferred embodiment of the invention, said at least one vent aperture defines a vent level for the waste fluid and the vent level is lower than the second overflowing level.

Advantageously, said at least one vent aperture prevents that waste fluid reaches the third flooding area if the filter element is not fully clogged and hence prevents false indication to the user of the filter being clogged.

Preferably, the filter element and the support are removably coupled to each other. Advantageously, simply disassembling operations of the filter element from the support are allowed.

In a preferred embodiment, the filter housing and the support are removably coupled to each other. Advantageously, simply disassembling operations of the support from the filter housing are allowed.

In a preferred embodiment, the filter housing and the support supporting the filter element are removably coupled one to the other. Advantageously, simply disassembling operations of the support supporting the filter element from the housing are allowed.

According to a preferred embodiment of the invention, there is further provided a cover configured to be coupled to the support.

In a preferred embodiment, the filter element is fixedly coupled to the support, preferably through one or more screws.

In a further preferred embodiment, the filter element is removably coupled to the support.

Preferably, the filter element is a cartridge.

In a preferred embodiment, the filter element has a tubular shape and the unfiltered area corresponds to the inner side of the filter element and/or the filter housing has a tubular shape and/or the outlet chamber has an annular tubular shape.

Preferably, the filter element comprises a plurality of filtering openings. According to a preferred embodiment of the invention, the size of the filtering openings is lower than 5 mm, more preferably lower than 200 µm, still more preferably equal to 75 µm.

Advantageously, the filter element allows filtration of contaminants such as microplastic elements contained in the waste fluid.

According to a preferred embodiment of the invention, the inlet is at least partially realized in the support.

Advantageously, the waste fluid is supplied into the unfiltered area from above.

Preferably, the inlet is configured to be connected to a drain circuit of the household appliance and/or the outlet is configured to be connected to a drainage point arranged outside the household appliance where the appliance will be installed.

In a preferred embodiment, the household appliance is a laundry washing machine.

### BRIEF DESCRIPTION OF THE DRAWINGS

Further characteristics and advantages of the present invention will be highlighted in greater detail in the following detailed description of a preferred embodiment of the invention, provided with reference to the enclosed drawings. In such drawings:
- Figure 1 shows a perspective view of a filter assembly fixed at a vertical wall according to a preferred embodiment of the invention;
- Figure 2 shows an exploded view of the filter assembly of Figure 1;
- Figure 3 shows a perspective view of some elements of Figure 2 in an assembled configuration as a module;
- Figure 4 shows the perspective view of Figure 3 with an element removed therefrom;
- Figure 5 shows an exploded view of Figure 4;
- Figure 6 shows a rear perspective view of the filter assembly of Figure 1;
- Figure 7 shows an exploded view of Figure 3;
- Figure 8 is a cross section view along plane π1 of figure 6;
- Figure 9 is a cross section view along plane π2 of figure 6;
- Figure 10 is a cross section view along a vertical plane of the filter assembly of figure 1 in normal operating condition;
- Figure 11 is a cross section view along a vertical plane of the filter assembly of figure 1 in a clogged filter operating condition;
- Figure 12 shows an exploded perspective view of some details of Figure 7;
- Figure 13 shows the perspective view of a detail of the filter assembly of Figure 1 in normal operating condition;
- Figure 14 shows the perspective view of Figure 13 with the filter assembly in the clogged filter operating condition;
- Figure 15 shows a partial cross sectional view of Figure 13;
- Figure 16 shows a partial cross sectional view of Figure 14;
- Figure 17 shows an enlarged cross view of Figure 3;
- Figures 18 to 20 shows successive steps for connecting elements one to the other to obtain the module of Figure 3;
- Figure 21 shows an element of figure 5 partially sectioned.

### DETAILED DESCRIPTION OF A PREFERRED EMBODIMENT OF THE INVENTION

The filter assembly according to the present invention has proved to be particularly advantageous when utilized for filtering of waste fluid discharged by a laundry washing machine. It should in any case be underlined that the present invention is not limited to this particular use. On the contrary, the present invention can be conveniently utilized for filtering of waste fluid discharged by a combined washing and drying machines.

In the present description, with the term "laundry washing machine" it is intended to either a simple laundry washing machine or a combined washing and drying machine.

Furthermore, the filter assembly according to the present invention has proved to be particularly advantageous when utilized for filtering microplastic elements contained in the waste fluid discharged by the household appliance, as better described later. It should in any case be underlined that the present invention is not limited to this peculiar filtering feature. On the contrary, the present invention can be conveniently utilized for filtering different type of contaminants, such as zeolites deriving from zeolite-based detergents or wool and/or cotton microfibres of clothes.

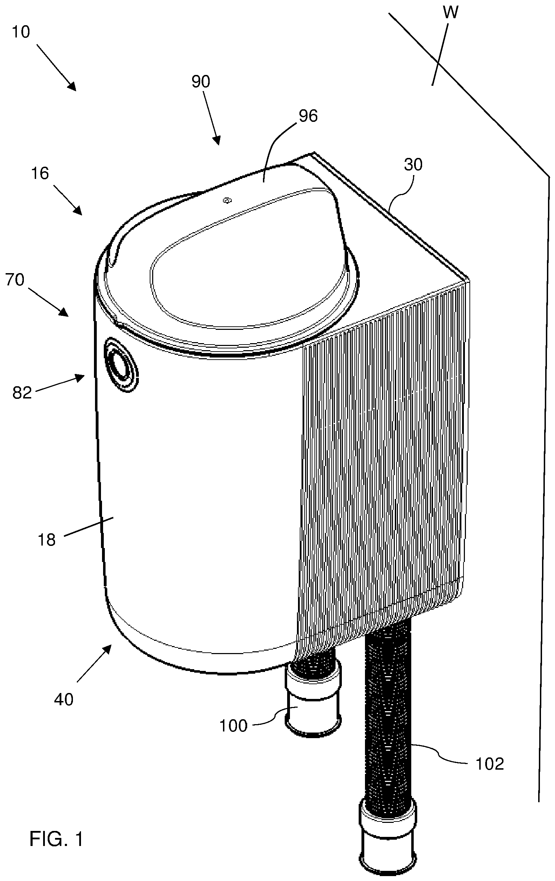

Figure 1 shows a filter assembly 10 according to a preferred embodiment of the invention.

The filter assembly 10 is preferably intended to be used in combination with a laundry washing machine (not shown in the figures), as said above.

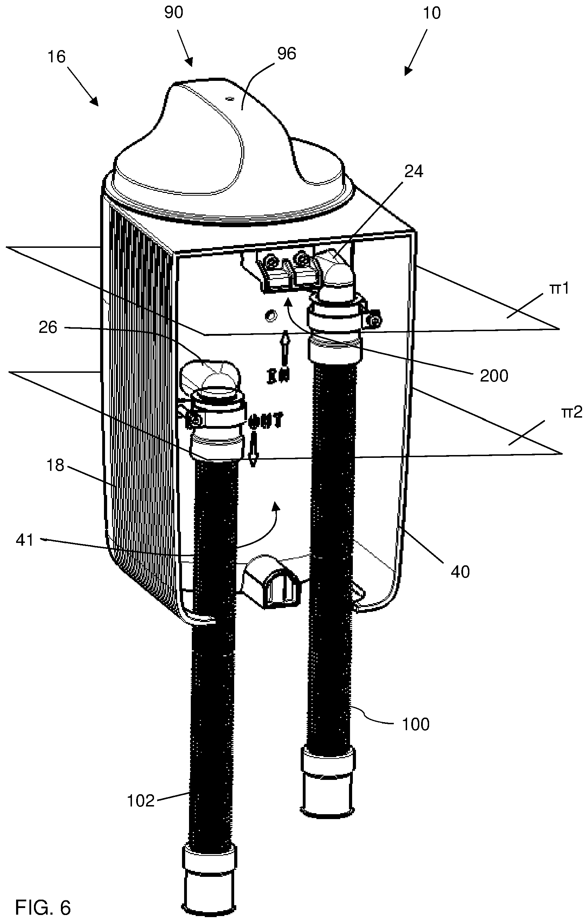

In Figure 1, two draining hoses 100, 102 are shown that are advantageously connected to the filter assembly 10 when in use, also better visible in Figure 6. The first draining hose 100 is connectable to the laundry washing machine and the second draining hose 102 is connectable to a drainage point (not shown). The filter assembly 10 preferably comprises a filter element 12 and a support 14 for the filter element 12. The filter element 12 and the support 14, as a unity, are referred hereinafter also as "filter module 16".

The filter element 12 and the support 14 are preferably removable coupled one to the other, as better described later.

The filter assembly 10 then preferably comprises a filter housing 18 receiving the filter element 12.

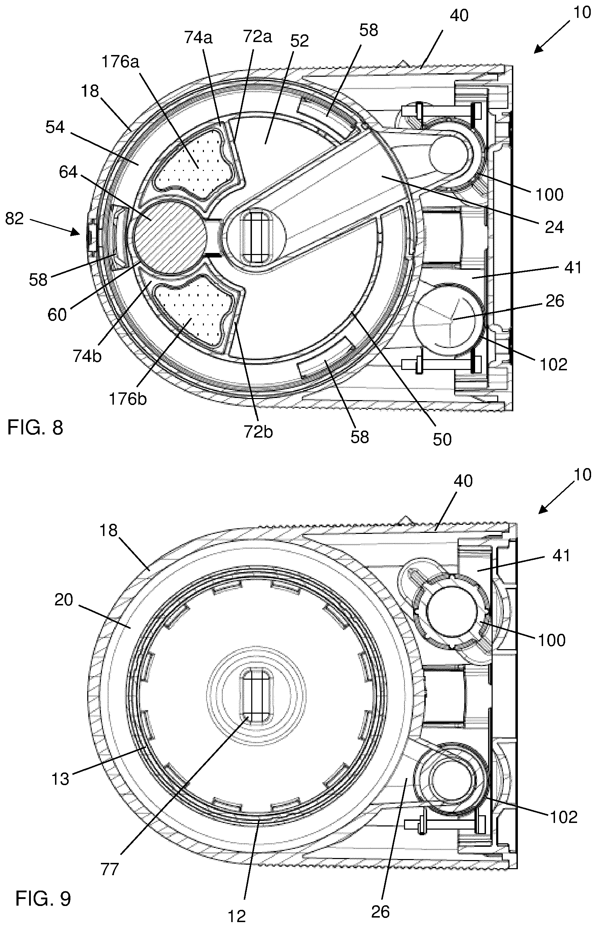

Between the filter element 12 and the filter housing 18 a chamber 20 is thus preferably defined for receiving fluid passing through the filter element 12, as shown in Figures 8, 9 and 10.

The filter housing 18 has an open mouth 19 for receiving the filter element 12. The filter housing 18 and the support 14 are preferably removable coupled one to the other, as better described later.

The filter housing 18 preferably receives and supports the filter module 16 comprising the filter element 12 and the support 14. The support 14 preferably has also the function of at least partially closing, from above, the filter housing 18.

According to the preferred embodiment illustrated in the figures, the filter element 12 preferably has a general tubular shape and the filter housing 18 also preferably has a general tubular shape, more preferably a cylindrical shape. The filter element 12, therefore, preferably constitute a so-called cartridge.

Accordingly, the chamber 20 preferably has a general annular tubular shape.

The filter element 12 preferably defines an unfiltered area 22 apt to receive the waste fluid coming from the laundry washing machine before its filtration. According to the preferred embodiment here illustrated, the unfiltered area 22 corresponds to the inner cylindrical area of the filter element 12. In a normal operating condition of the filter assembly 10, the waste fluid is supplied into the unfiltered area 22 and then undergoes to filtration by passing through the filter element 12. The filtered fluid reaches thus the chamber 20, or outlet chamber 20, and from there is expelled towards the drainage point.

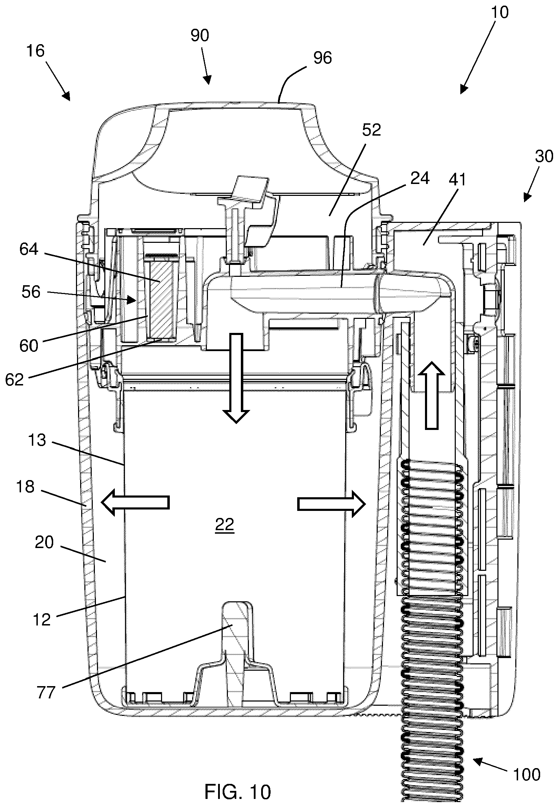

Adduction of the waste fluid coming from the first draining hose 100 to the unfiltered area 22 is preferably obtained through an inlet channel 24, better visible in Figures 8 and 10, configured to be fluidly coupled with the first draining hose 100 and the unfiltered area 22. The inlet channel 24 is preferably configured to supply the waste fluid into the unfiltered area 22 from above and is preferably partially realized in the support 14. The inlet channel 24 preferably terminates centrally with respect the unfiltered area 22. By centrally arranging the inlet channel 24, advantageously, the waste fluid under its pressure is homogenously pushed substantially perpendicularly towards the filter element 12 thus obtaining a better filtration efficiency and/or capacity.

Analogously, adduction of the filtered fluid from the outlet chamber 20 to the second draining hose 102 is preferably obtained through an outlet channel 26, better visible in Figure 6.

The outlet channel 26 is preferably realized at the outer surface of the filter housing 18, as better visible in Figure 9.

While the shape of the filter element and/or of the filter housing is preferably tubular, and more preferably cylindrical, in different preferred embodiments the filter element and/or filter housing may have a different shape. For example, the filter element can be a flat/planar filter. In such a case, the unfiltered area is preferably defined between the filter housing and the left or right side of the filter element.

The filter housing 18 substantially constitutes most of the external casing 40 of the filter assembly 10 and is apt to support the filter module 16 when the filter assembly 10 is in its mounted position. For this purpose, the filter assembly 10 preferably comprises a fixing base 30 apt to fix the external casing 40 to a vertical wall W, as shown in Figure 1.

The fixing base 30 is advantageously securely fixed at the wall W through a proper fastening device (not shown), such as screw wall plugs. The external casing 40 is then preferably removably connected to the fixing base 30 so that the external casing 40 may be easily removed from its mounted position, when necessary. In particular, external casing 40, filter housing 18 and filter module 16 in their assembled configuration may be easily removed from their mounted position, when necessary.

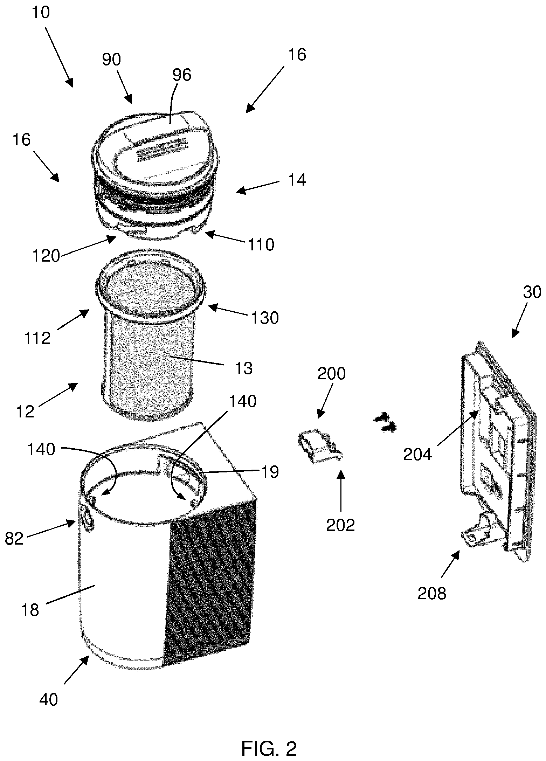

Removable connection between the fixing base 30 and the external casing 40 is preferably obtained through an upper connector 200 (Figure 2), fixed to the external casing 40, having grasping fingers 202 that engage a first retaining surface 204 of the fixing base 30 and a lower elastic tab (not shown) protruding from the external casing 40 that engages a second retaining surface 208 of the fixing base 30. Said elements allow a snap-fit connection between the external casing 40 and the fixing base 30.

Between the external casing 40, the rear outer surface of the filter housing 18 and the fixing base 30 a chamber 41 (Figure 6) is defined where the draining hoses 100 and 102 are inserted and connected to inlet and outlet channels 24, 26, respectively.

In a preferred embodiment of the invention, the part of the filter element 12 filtering the waste fluid comprises a mesh 13, more preferably a mesh 13 comprising a woven wire. In a preferred embodiment the wire is made of polyethylene.

Preferably, the mesh is chosen to have a mesh size lower than 5 mm, more preferably a mesh size lower than 200 µm, still more preferably a mesh size of 75 µm.

Here the mesh size preferably corresponds to the side length of the substantially squared opening defined by the woven wire.

In general, the filter element may be realized with a filter surface provided with opening. Accordingly, the filter element may be chosen to have openings which size lower than 5 mm, more preferably lower than 200 µm, still more preferably equal to 75 µm.

According to an aspect of the invention, this mesh size, or openings size, allows filtration of contaminants having size lower than 5 mm, and in particular filtration of microplastic elements contained in the waste fluid.

With microplastic elements it has to be intended the plastic residues deriving from the washing machine treatments that have a dimension lower than 5 mm.

It is clear that said chosen openings size allows also filtration of other type of contaminants contained in the waste fluid, such as zeolites deriving from zeolite-based detergents or wool and/or cotton microfibres of clothes.

Advantageously, the filter assembly 10 with its filter element 12 holds contaminants, in particular microplastic elements, avoiding its drainage and thus reducing environmental impact.

Preferably, the filter element and in particular the mesh 13 is preferably made of a flexible material, such as polyethylene. The filter element 12, thus, preferably is flexible and can be easily handled during cleaning operations, as better explained later.

The above-described elements of the filter assembly 10 allow the normal operating condition of the filter assembly 10, i.e. adduction of waste fluid to the filter assembly 10, filtration of the waste fluid (in particular of microplastic elements) and drainage of the filtered fluid to the outside.

Hereinafter, advantageous new features of the filter assembly 10 related to special operating condition of the same according to the invention, are described. In particular, said new features provide special operating conditions of the filter assembly 10 when, over the time, the filter element 12 gets clogged, hereinafter "clogged filter operating condition".

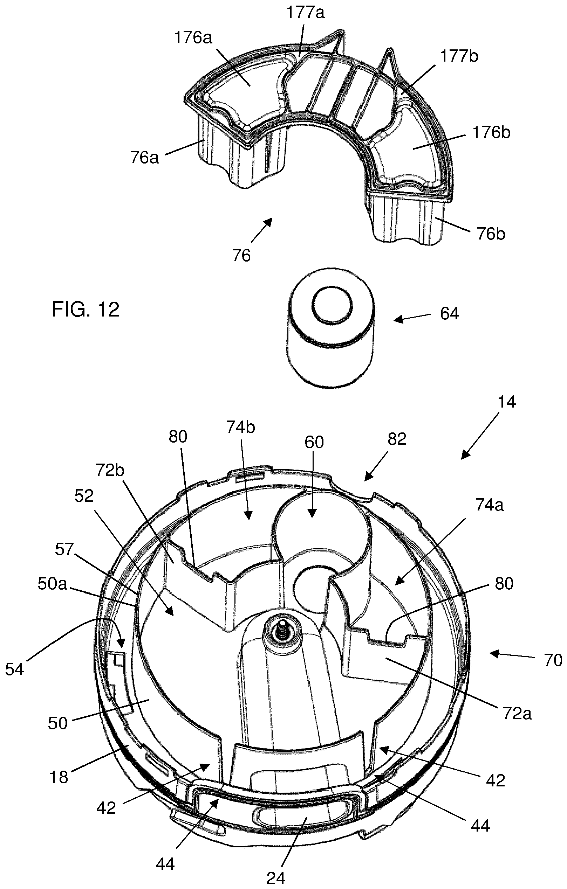

According to a preferred aspect of the invention, as better visible in Figures 8 and 12, the support 14 comprises a first wall 50 that defines a first flooding area 52 and a second flooding area 54, wherein the second flooding area 54 is separated from the first flooding area 52. In the preferred embodiment illustrated herein, the first wall 50 preferably has a general cylindrical shape and the first flooding area 52 is defined in the inner side with respect to the first wall 50 and the second flooding area 54 is defined in the outer side with respect to the first wall 50. The second flooding area 54 preferably has a general annular tubular shape.

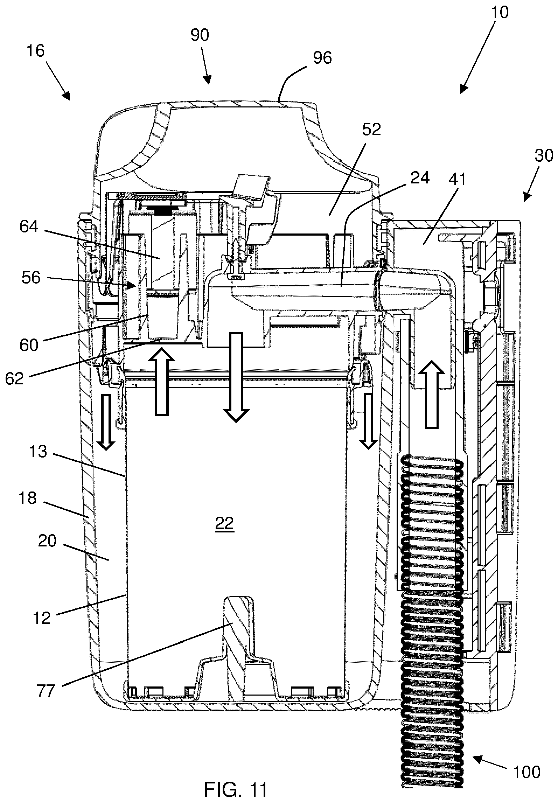

The first flooding area 52 is preferably fluidly connected to the unfiltered area 22 through a valve 56 configured to allow unfiltered waste fluid to flow from the unfiltered area 22 to the first flooding area 52, as indicated in Figure 11.

The second flooding area 54 preferably comprises at least one aperture 58 preferably communicating with the outlet chamber 20 so that fluid from the second flooding area 54 may flow towards the outlet channel 26, as better described later. In the embodiment illustrated herein, there are provided three extended apertures 58 preferably equally distributed inside the second flooding area 54. In different preferred embodiments, the number and/or shape and/or position of said apertures may be different from what shown in the Figures. Preferably, the valve 56 is configured to allow the waste fluid to flow from the unfiltered area 22 to the first flooding area 52 when the waste fluid pressure inside the unfiltered area 22 exceeds a predetermined pressure threshold Ps or, in other words, the valve 56 opens when the waste fluid pressure inside the unfiltered area 22 exceeds said pressure threshold Ps.

It has to be noted that in the normal operating condition, when the filter assembly 10 is working properly, the waste fluid undergoes to normal filtration through the filter element 12 and the fluid pressure inside the unfiltered area 22 substantially remains below the predetermined pressure threshold Ps. Over the time, with the filter element 12 getting clogged, the fluid pressure inside the unfiltered area 22 increases until it reaches the pressure threshold Ps. The pressure threshold Ps at which the valve opens is properly chosen to substantially correspond to the situation wherein the filter element 12 is fully clogged. In this particular operating condition (clogged filter operating condition), therefore, the waste fluid is substantially impeded to pass through the filter element 12 and the waste fluid is conveyed to the first flooding area 52 through the opened valve 56.

The valve 56 preferably comprises a seat 60 having an aperture 62 facing the unfiltered area 22, and a main body 64 slidingly received in the seat 60 (Figures 10 and 11).

The seat 60 and the main body 64 are preferably cylindrically shaped.

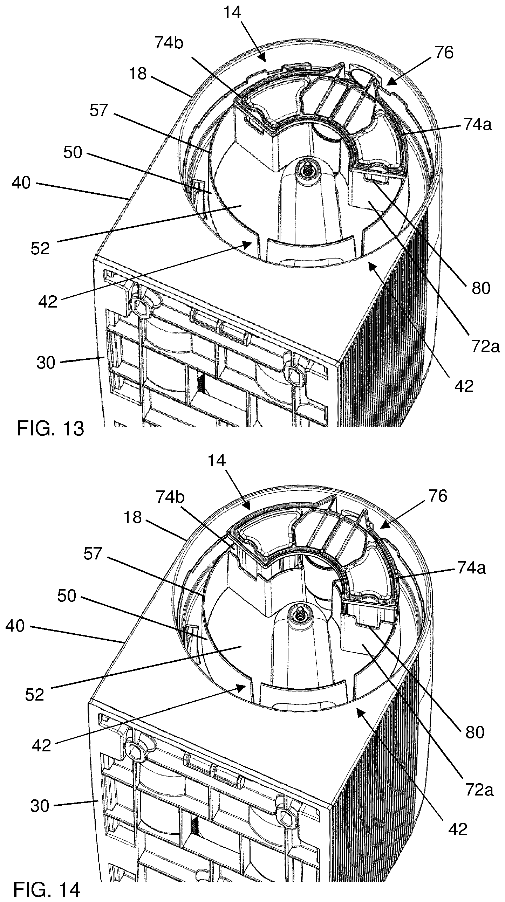

The main body 64 may have a first closing position, as shown for example in Figures 10 and 13, wherein the main body 64 lay down on the seat 60 and closes the aperture 62 (normal operating condition). The main body 64 may then have at least an opening position, as shown for example in Figures 11 and 14, wherein the main body 64 is at least partially lifted and the aperture 62 is opened. In such a condition, the fluid may flow from the unfiltered area 22 to the first flooding area 52.

The weight of the main body 64 is opportunely chosen so that its starts to lift when the fluid inside the unfiltered area 22 reaches the pressure threshold Ps and goes/pushes towards the aperture 62.

As said above, the first flooding area 52 and the second flooding area 54 are separated from each other by the first wall 50.

Nevertheless, the first wall 50 is opportunely configured so that fluid may overflow the first wall 50 and hence fluid overflowing from the first flooding area 52 may reach the second flooding area 54. The first wall 50 preferably defines a first overflowing level 57 that substantially corresponds to the lower point of the upper edge 50a of the wall 50.

According to an advantageous aspect of the invention, the above-described elements of the filter assembly 10 allow the particular operating of the filter assembly 10 when the filter element 12 becomes fully clogged (Figures 11 and 14).

In such a situation, the waste fluid reaching the unfiltered area 22 from the inlet channel 24 is substantially impeded to pass through the filter element 12 and reaches the pressure threshold Ps inside the unfiltered area 22. The valve 56 opens and the waste fluid is conveyed from the unfiltered area 22 to the first flooding area 52. The waste fluid fills the first flooding area 52 and, once has reached the first overflowing level 57, flows into the second flooding area 54. From the second flooding area 54, the waste fluid falls into the outlet chamber 20 through apertures 58. The waste fluid is finally expelled to the outside through the outlet channel 26 and the second draining hose 102.

It is clear, from the above, that in the clogged filter operating condition the waste fluid flow coming from the washing machine is not interrupted. The waste fluid, even not filtered, is anyway expelled through the second draining hose 102, as said above. In other words, the filter assembly 10 guarantees a by-pass function for the waste fluid in case of a clogged filter.

Advantageously, the flow of waste fluid is not interrupted by the clogged filter assembly 10 and functional fault or failure of the laundry washing machine connected thereto is prevented. Moreover, fluid is prevented to overflow from the filter assembly 10 and falling over the floor thereby flooding the room where the laundry washing machine is placed. The filter assembly 10 of the invention is therefore safer compared to known systems.

Successive maintenance operations, such as cleaning or substitution of the filter element 12, then advantageously restore the normal operating of the filter assembly 10.

According to a further aspect of the invention, the filter assembly 10 preferably comprises a display system 70 apt to indicate a clogging condition of the filter element 12.

The display system 70, partially shown in Figure 12, preferably comprises at least a second wall 72a, 72b arranged in the first flooding area 52, wherein at least part of the first wall 50 and the second wall 72a, 72b define at least a third flooding area 74a, 74b separated from the first and second flooding areas 22, 24. In the preferred embodiment illustrated herein, there are provided two second walls 72a, 72b and corresponding two third flooding areas 74a, 74b. In different preferred embodiments, the number of second walls and corresponding third flooding areas may be different, even just only one.

The display system 70 then preferably comprises a floating element 76 housed in the third flooding areas 74a, 74b. The floating element 76 is configured to be lifted when fluid enters the corresponding third flooding areas 74a, 74b.

The second walls 72a, 72b are opportunely configured so that fluid may overflow the second walls 72a, 72b and hence fluid from the first flooding area 52 may reach the third flooding areas 74a, 74b. The second walls 72a, 72b preferably define a second overflowing level 80 that substantially corresponds to the lower point of the upper edge of the second walls 72a, 72b.

The second overflowing level 80 is preferably set at a lower height with respect to the first overflowing level 57.

The display system 70 then preferably comprises a window 82 configured to make the floating element 76 visible from outside when lifted. The window 82 is preferably realized in the filter housing 12 and more preferably in the frontal part of the filter housing 12.

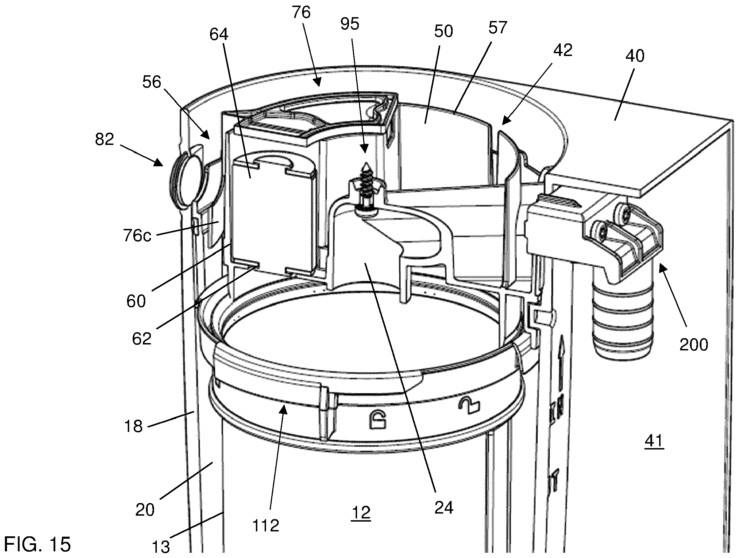

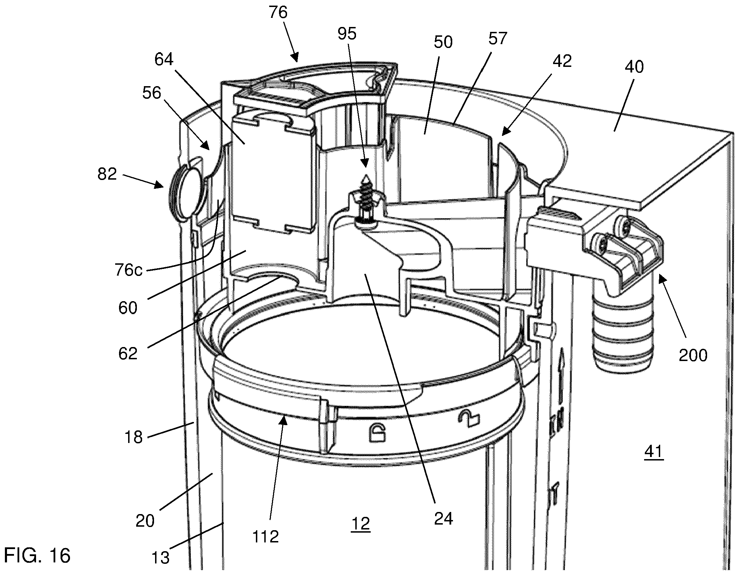

Preferably, the floating element 76 comprises a tab 76c, more preferably a coloured tab, which is arranged closed to the window 82, as visible in Figures 15 and 16.

Preferably, when the floating element 76 is not lifted, the tab 76c lays below the window 82 and is not visible from outside. When the floating element 76 rises, the tab 76c progressively becomes visible from outside through the window 82. At its maximum, the tab 76c totally covers the window 82 and thus indicates that the filter element 12 is fully clogged.

In fact, in said clogged operating condition of the filter assembly 10, the waste fluid as explained above is conveyed to the first flooding area 52. The waste fluid that fills the first flooding area 52, once has reached the second overflowing level 80, flows into the third flooding areas 74a, 74b. Consequently, the floating element 76 is lifted and the tab 76c progressively becomes visible from outside, and eventually reaches its maximum, for example the maximum position shown in Figure 16. At the same time, as described above, the waste fluid fills the first flooding area 52, reaches the first overflowing level 57 and flows into the second flooding area 54. From there the waste fluid falls into the outlet chamber 20 through apertures 58 and is finally expelled to the outside through the outlet channel 26 and the second draining hose 102.

Therefore, advantageously, in said clogged condition the filter assembly 10 guarantees the by-pass function for the waste fluid and the display system 70 through the window 82 gives indication of the ongoing clogged condition.

A user is therefore promptly informed about the clogging status of the filter element 12 and induced to clean or replace the filter element 12.

According to the preferred embodiment illustrated herein, the floating element 76 preferably comprises two floating parts 76a, 76b connected therebetween and received in the respective third flooding areas 74a, 74b.

The two floating parts 76a, 76b are preferably arranged symmetrically with respect to a plane passing from the center of gravity. In this way the object receives a floating lift in a balanced way when fluid fills the third flooding areas 74a, 74b.

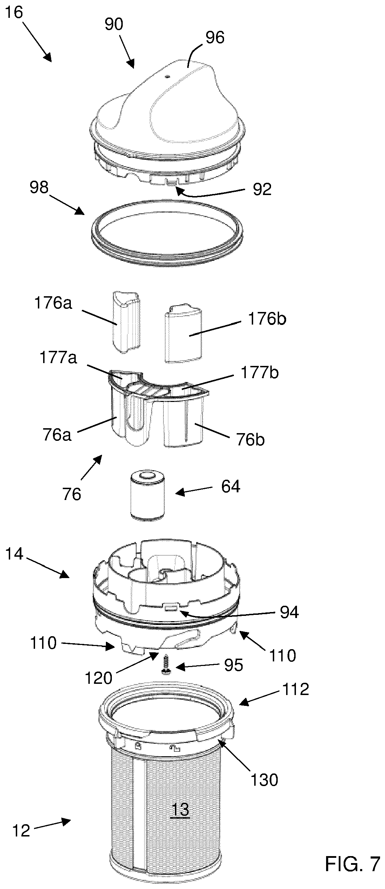

The two floating parts 76a, 76b preferably comprises two bodies 176a, 176b received in respective seats 177a, 177b (Figure 7). The two bodies 176a, 176b are preferably light bodies, for example closed hollow bodies or light solid bodies.

In different preferred embodiments, the number of third flooding areas and floating parts may be different, even just only one.

According to a further aspect of the invention, the first wall 50 preferably comprises one or more vent apertures 42 that put in fluid communication the first flooding area 52 and the second flooding area 54.

Said one or more vent apertures 42 are opportunely configured so that the waste fluid, before reaching the second overflowing level 80 and the first overflowing level 57, from the first flooding area 52 may reach the second flooding area 54. Said one or more vent apertures 42 thus preferably defines a vent level 44 that substantially corresponds to the lower point of the apertures 42, as shown in Figure 12. In the preferred embodiment illustrated in the Figures, there are two V-shaped vent apertures 42 that are therefore preferably open upwards.

In further preferred embodiments, said one or more vent apertures may be differently shaped and may also comprise closed, not open upwards, apertures, such as a simple circular hole realized in the first wall.

The vent level 44 is set at a lower height with respect to the first overflowing level 57 and is preferably set at a lower height with respect to the second overflowing level 80.

The function of said vent apertures 42 is that of conveying waste fluid from the first flooding area 52 to the second flooding area 54 and preventing the waste fluid to reach the third flooding areas 74a, 74b if the waste fluid coming from the unfiltered area 22 in the first flooding area 52 through the valve 56 does not flow in a continuous way. This may happen, for example, if the valve 56 inadvertently opens even if the filter element 12 is not still fully clogged.

If the first wall 50 would not comprise the vent apertures 42, the waste fluid would reach the third flooding areas 74a, 74b, the floating element 76 would lift and thus falsely notifying the user of a clogged condition.

The vent apertures 42, thus, advantageously prevent that waste fluid reaches the third flooding areas 74a, 74b if the filter element 12 is not fully clogged and hence prevents false indication to the user of the filter being clogged.

On the other hand, if the filter element 12 is really clogged, the waste fluid coming from the unfiltered area 22 into the first flooding area 52 through the valve 56, flows in a continuous way, fills the first flooding area 52, the third flooding areas 74a, 74b and the second flooding area 54 as described above.

The filter module 16, then, preferably comprises a cover 90 closing from above said flooding areas 52, 54, 74a, 74b. The cover 90 is preferably configured to be coupled to the support 14, more preferably to be fixedly coupled to the support. The cover 90 preferably comprises tabs 92 (Figure 7) apt to be snapped into respective apertures 94 of the support 14 and a screw 95 is preferably used to fix the cover 90 to the support 14.

In a further preferred embodiment, not shown, the filter element may be removably coupled to the support, for example through a snap-in connection. The cover 90 preferably comprises a handgrip portion 96 that helps handling of the cover 90.

A sealing 98 element is preferably interposed between the cover 90 and the support 14, more preferably an elastic ring.

Hereinafter, advantageous features relating to removable connection between the filter element 12 and the support 14 to realize the filter module 16 and removable connection between the filter module 16 and the filter housing 18 are described in detail.

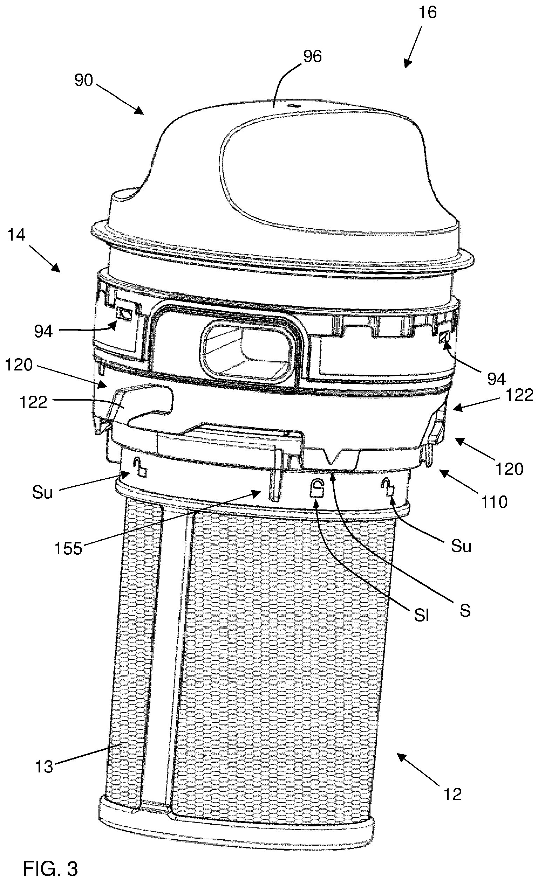

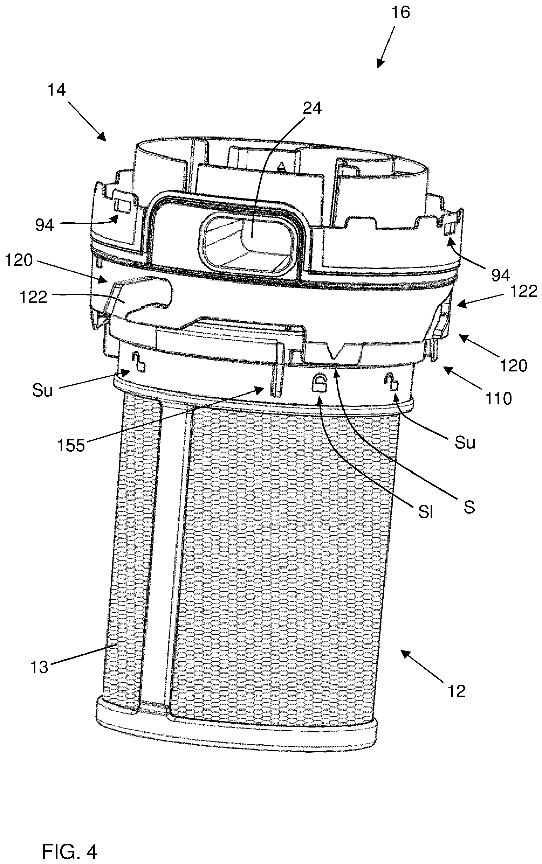

The support 14 preferably comprises at least one first retention element 110 and at least one second retention element 120 (Figures 3 to 5).

Preferably, there are provided three first retention elements 110 facing the filter element 12. The three first retention elements 110 are preferably equally distributed at the support 14, i.e. at 120° one to the other.

Preferably, there are provided two second retention elements 120 facing the filter housing 18. The two second retention elements 120 are angularly spaced apart on the support 14.

The filter element 12 preferably comprises at last one third retention element 130 configured to be removably coupled to the at least one first retention element 110.

Preferably, the filter element 12 comprises three third retention elements 130 facing the support 14. The three third retention elements 130 are preferably equally distributed at the filter element 12, i.e. at 120° one to the other. Preferably, the filter element 12 comprises a collar 112 facing the support 14 and, preferably, the last one third retention element 130 is realized on said collar 112. Preferably, the three third retention elements 130 are realized on said collar 112, more preferably equally distributed at the collar 112, i.e. at 120° one to the other. The filter housing 18 preferably comprises at last one fourth retention element 140 (Figure 2) configured to be removably coupled to the at least one second retention element 120.

Preferably, the filter housing 18 comprises two fourth retention elements 140 facing the support 14. The two fourth retention elements 140 are angularly spaced part on the filter housing 18.

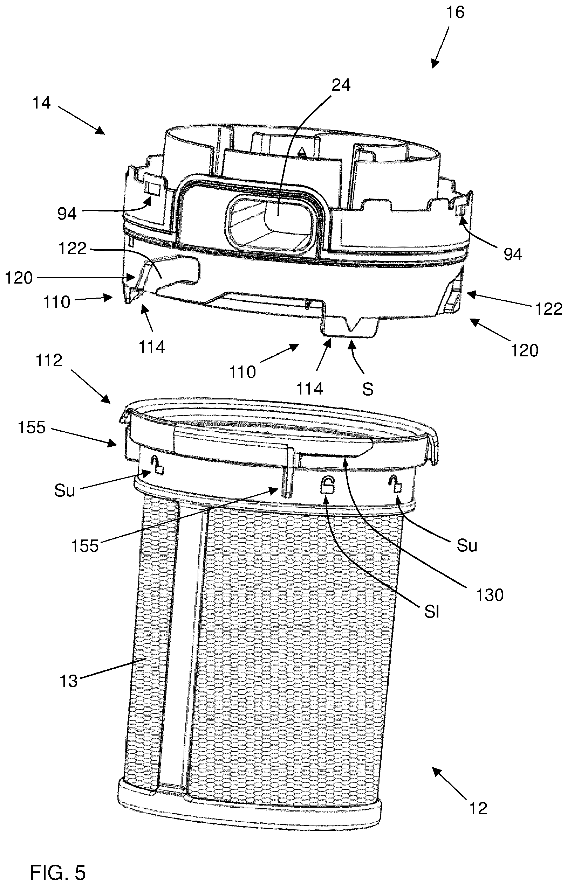

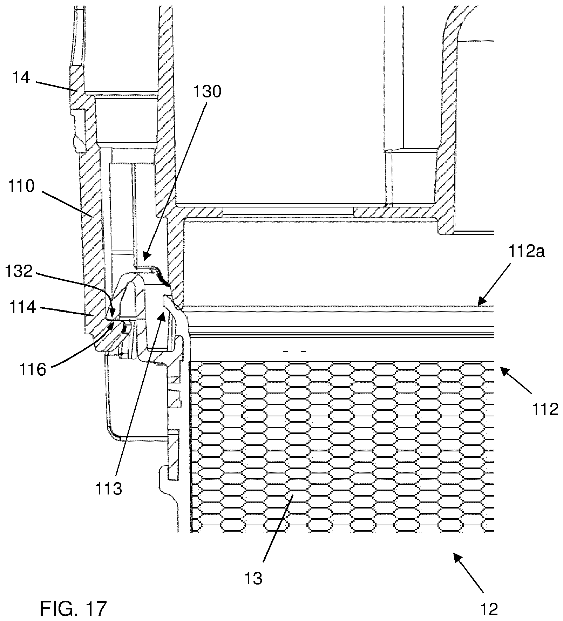

Advantageously, first retention elements 110 at support side and third retention elements 130 at filter element side allow removable connection between the support 14 and the filter element 12 and, analogously, second retention elements 120 at support side and fourth retention elements 140 at filter housing side allow removable connection between the support 14 and the filter module 16. According to the preferred embodiment illustrated in the figures, each of the first retention elements 110 comprises a flap 114 (Figures 5 and detail of Figure 17) provided with a retention surface 116 and each of the third retention elements 130 is provided with a corresponding retention surface 132. The flap 114 is substantially configured as a hook.

In the connected position of the filter element 12 to the support 14, the retention surface 116 of the first retention elements 110 abuts against the retention surface 132 of the third retention elements 130, as illustrated in Figure 17.

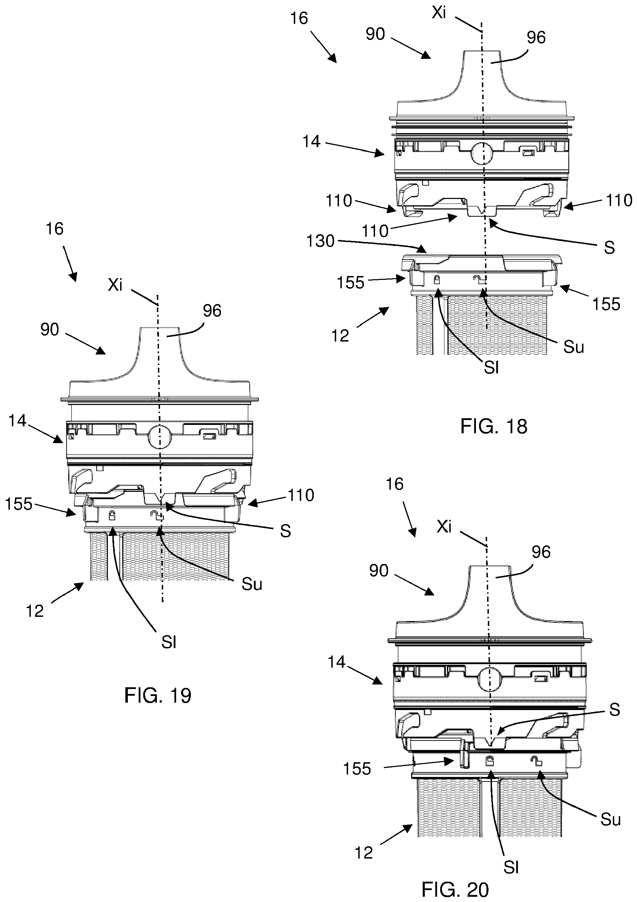

The filter element 12 is connected to the support 14 preferably through a bayonet connection. As illustrated in Figures 18 to 20, connection of the filter element 12 to the support 14 comprises the step of inserting the collar 112 of the filter element 12 into the support 14, preferably along an insertion axis Xi, and a step of rotating the filter element 12 about said axis Xi so that the third retention elements 130 come into contact with the first retention elements 110 and corresponding retention surfaces 116, 132 engage.

Analogously, the filter element 12 may be easily removed from the support 14 by rotating the filter element 12 about said axis Xi so that the third retention elements 130 are pulled out from respective first retention elements 110, and hence retention surfaces 116, 132 disengage.

Preferably, the outer surface of the flap 114 and the outer surface of the collar 112 comprises symbols S, Sl, Su indicating reciprocal operating positions, locked and unlocked, between the filter element 12 and the support 14 (Figures 18 to 20).

The flap 114 preferably comprises an arrowhead symbol S and the support 14 preferably comprises a locked symbol Sl and an unlocked symbol Su.

To facilitate rotation of the filter element 12, there are one or more tabs 155 outwardly protruding from the filter element 12, more preferably protruding from the collar 112.

Preferably, there are provided three tabs 155 preferably equally distributed at the filter collar 112, i.e. at 120° one to the other.

Tabs 155 are advantageously pushed by the user thus facilitating locking/unlocking of the filter element 12 to/from the support 14.

The upper edge 112a of the collar 112 preferably comprises a lip 113 extending circumferentially and apt to abut against the support 14 in order to guarantee sealing between the filter element 12 and the support 14 in their reciprocal connected position (Figure 17).

According to the preferred embodiment illustrated in the figures, each of the second retention elements 120 of the support 14 preferably comprises a shaped slot 122 extending circumferentially on the outer surface of the support 14 and each of the fourth retention elements 140 of the filter housing 18 preferably comprises a pin inwardly protruding from the filter housing 18.

Preferably, the support 14 comprises three slots 122 facing the filter housing 18. The three slots 122 are preferably equally distributed at the support 14, i.e. at 120° one to the other.

Preferably, the filter housing 18 comprises three pins 140 facing the support 14. The three pins 140 are preferably equally distributed at the filter housing 18, i.e. at 120° one to the other.

In the reciprocal connected position of the housing element 18 to the support 14, the pins 140 of the housing element 18 are inserted into corresponding slots 122 of the support 14.

The filter module 16, i.e. support 14 and filter element 12, is brought into connection to the housing element 18 preferably through a bayonet connection. Connection of the filter module 16 to the housing element 18 comprises the step of inserting the three pins 140 of the housing element 18 into corresponding three slots 122 of the support 14, preferably along an insertion axis Xi, and a step of rotating the filter module 16 about said axis Xi so that the pins 142 slide into respective slots 122.

The filter module 16 is preferably moved by handling it through the cover 90, more preferably through the handgrip portion 96.

Analogously, the filter module 16, i.e. the support 14 and the filter element 12, may be easily removed from the filter housing 18 by rotating the filter module 16 about said axis Xi so that the pins 140 are pulled out from respective slots 122. Removal of the filter module 16 from the filter housing 18 is preferably carried out for maintenance of the filter assembly 10, in particular to clean or substitute the filter element 12.

The filter module 16 is firstly removed from the filter housing 18. The filter module 16 is removed from the filter housing 18 by firstly rotating the support 14 with respect to the filter housing 18 and then by lifting the filter module 16 from the filter housing 18.

When the filter module 16 is extracted from the filter housing 18, the filter element 12 is maintained in its connected position to the support 14. Advantageously, any risk that the filter element 12 falls, or remain, into the filter housing 18 is avoided.

After removal of the filter module 16, the filter element 12 may be easily removed from the support 14 for its cleaning or substitution.

The filter element 12 is removed from the support 14 by firstly rotating the filter element 12 with respect to the support 14 and then by pulling it away from the support 14.

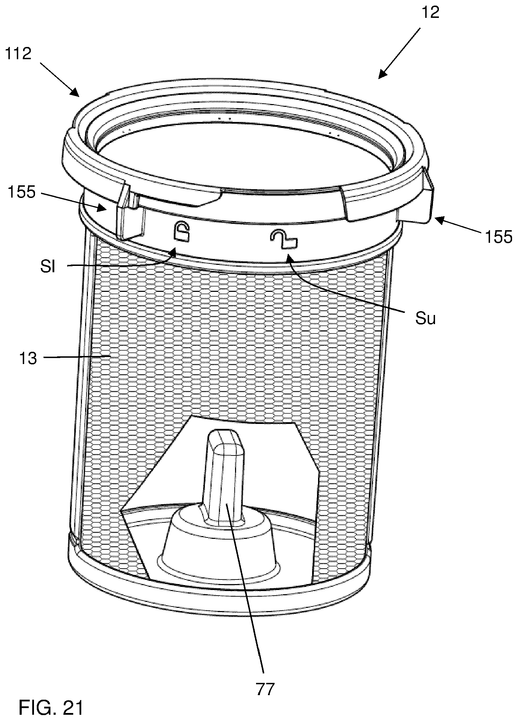

To help the cleaning operation, the filter element 12 preferably comprises a handle 77 (Figure 21) available at the bottom of the filter element 12 so that the filter element 12, thanks to its flexibility, can be turned inside out pulling the handle 77.

The cleaned, or new, filter element 12 is then connected to the support 14, as described above, and the filter module 16 is finally connected to the housing 18. It is clear from the above that the filter assembly according to the invention advantageously allows filtration of contaminants, in particular microplastic elements, contained in waste fluid discharged by household appliances, in particular by laundry washing machines.

The filter assembly, which is intended to be used in combination with the household appliance external to the same, is then advantageously easily reachable by the user for maintenance operations (cleaning or replacing of the filter element). In particular, the filter assembly allows cleaning or replacing of the filter element which gets clogged with microplastic or microfibers elements.

The use of an external filter assembly, furthermore, avoids the necessity of installing a filter for microplastic or microfibers elements inside the laundry washing machine. The use of a filter inside the machine may be difficult, or even impossible, in terms of available spaces for its installation or may be problematic due to the necessity of continuous maintenance when the filter gets clogged. Furthermore, a clogged filter would cause a functional fault or failure of the machine or, worst, fluid from the filter could overflow and reaching other parts of the machine.

It has thus been shown that the present invention allows all the set objects to be achieved. In particular, the filter assembly of the invention makes it possible to avoid functional fault or failure of the machine to which is being connected. While the present invention has been described with reference to the particular embodiment shown in the figures, it should be noted that the present invention is not limited to the specific embodiment illustrated and described herein; on the contrary, further variants of the embodiment described herein fall within the scope of the present invention, which is defined in the claims.

## Claims

1. Filter assembly (10) for filtering a waste fluid discharged by a household appliance, said filter assembly (10) comprising:
- a filter element (12) defining an unfiltered area (22) receiving said waste fluid;
- a filter housing (18) receiving said filter element (12), wherein an outlet chamber (20) is defined between said filter element (12) and said filter housing (18) for receiving fluid passing through said filter element (12) and coming from said unfiltered area (22);
- a support (14) for said filter element (12);
- an inlet (24) through which said waste fluid is supplied to said unfiltered area (22);
- an outlet (26) fluidly connected to said outlet chamber (20), through which the waste fluid flows from said outlet chamber (20) to a drain;
**characterized in that**
said support (14) comprises a first wall (50) defining a first flooding area (52) and a second flooding area (54) separated from said first flooding area (52) by said first wall (50);
wherein said first flooding area (52) is fluidly connected to said unfiltered area (22) through a valve (56) configured to allow unfiltered waste fluid to flow from said unfiltered area (22) to said first flooding area (52);
wherein said second flooding area (54) is apt to receive unfiltered waste fluid coming from said first flooding area (52) by overflowing said first wall (50) and wherein said second flooding area (54) comprises at least one aperture (58) configured to allow unfiltered waste fluid to flow towards said outlet (26).

2. Filter assembly (10) according to claim 1, wherein said at least one aperture (58) is realized between said second flooding area (54) and said outlet chamber (20).

3. Filter assembly (10) according to claim 1 or 2, wherein said support (14) comprises a second wall (72a, 72b) arranged in said first flooding area (52), wherein at least part of said first wall (50) and said second wall (72a, 72b) define a third flooding area (74a, 74b) separated from said first and said second flooding areas (52, 54) and wherein said third flooding area (74a, 74b) is apt to receive unfiltered waste fluid coming from said first flooding area (52) by overflowing said second wall (72a, 72b).

4. Filter assembly (10) according to claim 3, wherein said support (14) comprises a floating element (76) housed in said third flooding area (74a, 74b).

5. Filter assembly (10) according to claim 4, wherein said floating element (76) is configured to be lifted when unfiltered waste fluid coming from said first flooding area (52) overflows said second wall (72a, 72b) and fills said third flooding area (74a, 74b).

6. Filter assembly (10) according to claim 4 or 5, wherein said filter housing (18) comprises a window (82) configured to make said floating element (76) visible from outside when lifted so as to indicate a clogging condition of said filter element (12).

7. Filter assembly (10) according to any of the claims 3 to 6, wherein said first wall (50) defines a first overflowing level (57) for the waste fluid that overflows said first wall (50) and said second wall (72a, 72b) defines a second overflowing level (80) for the waste fluid that overflows said second wall (72a, 72b).

8. Filter assembly (10) according to claim 7, wherein said second overflowing level (80) is lower than said first overflowing level (57).

9. Filter assembly (10) according to any of the claims 3 to 8, wherein said first wall (50) comprises at least one vent aperture (42) through which unfiltered waste fluid can flow from said first flooding area (52) to said second flooding area (54) before said waste fluid overflows said first wall (50) and said second wall (72a, 72b).

10. Filter assembly (10) according to claim 8 and 9, wherein said at least one vent aperture (42) defines a vent level (44) for the waste fluid and wherein said vent level (44) is lower than said second overflowing level (80).

11. Filter assembly (10) according to any of the preceding claims, wherein said filter element (12) and said support (14) are removably coupled to each other.

12. Filter assembly (10) according to any of the preceding claims, wherein said filter housing (18) and said support (14) are removably coupled to each other.

13. Filter assembly (10) according to any of the preceding claims, further comprising a cover (90) configured to be coupled to said support (14), preferably configured to be fixedly coupled to said support (14).

14. Filter assembly (10) according to any of the preceding claims, wherein said filter element (12) is a cartridge.

15. Filter assembly (10) according to any of the preceding claims, wherein said filter element (12) has a tubular shape and said unfiltered area (22) corresponds to the inner side of said filter element (12) and/or said filter housing (18) has a tubular shape and/or said outlet chamber (20) has an annular tubular shape.

16. Filter assembly (10) according to any of the preceding claims, wherein said inlet (24) is at least partially realized in said support (14).

17. Filter assembly (10) according to any of the preceding claims, wherein said inlet (24) is configured to be connected to a drain circuit of said household appliance and/or said outlet (26) is configured to be connected to a drainage point arranged outside said household appliance where the appliance will be installed.

18. Filter assembly (10) according to any of the preceding claims, wherein said household appliance is a laundry washing machine.

## Patentansprüche

1. Filteranordnung (10) zum Filtrieren einer von einem Haushaltsgerät abgegebenen Abfallflüssigkeit, wobei die Filteranordnung (10) Folgendes umfasst:
- ein Filterelement (12), das einen ungefilterten Bereich (22) zur Aufnahme der Abfallflüssigkeit definiert;
- ein Filtergehäuse (18) zur Aufnahme des Filterelements (12), wobei eine Auslasskammer (20) zwischen dem Filterelement (12) und dem Filtergehäuse (18) zur Aufnahme von durch das Filterelement (12) verlaufender und vom ungefilterten Bereich (22) kommender Flüssigkeit definiert ist;
- einen Träger (14) für das Filterelement (12);
- einen Einlass (24), durch welchen die Abfallflüssigkeit dem ungefilterten Bereich (22) zugeführt wird;
- einen Auslass (26), der mit der Auslasskammer (20) in Fluidverbindung steht, durch welchen die Abfallflüssigkeit von der Auslasskammer (20) zu einem Abfluss strömt;
**dadurch gekennzeichnet, dass**
der Träger (14) eine erste Wand (50) umfasst, die einen ersten Flutungsbereich (52) und einen durch die erste Wand (50) vom ersten Flutungsbereich (52) getrennten zweiten Flutungsbereich (54) definiert;
wobei der erste Flutungsbereich (52) durch ein Ventil (56) mit dem ungefilterten Bereich (22) in Fluidverbindung steht, das dazu ausgelegt ist, zuzulassen, dass ungefilterte Abfallflüssigkeit vom ungefilterten Bereich (22) zum ersten Flutungsbereich (52) strömt;
wobei der zweite Flutungsbereich (54) dazu geeignet ist, ungefilterte Abfallflüssigkeit aufzunehmen, die durch Überfluten der ersten Wand (50) vom ersten Flutungsbereich (52) kommt, und wobei der zweite Flutungsbereich (54) mindestens eine Öffnung (58) umfasst, die dazu ausgelegt ist, zuzulassen, dass ungefilterte Abfallflüssigkeit zum Auslass (26) hin strömt.

2. Filteranordnung (10) nach Anspruch 1, wobei die mindestens eine Öffnung (58) zwischen dem zweiten Flutungsbereich (54) und der Auslasskammer (20) ausgeführt ist.

3. Filteranordnung (10) nach Anspruch 1 oder 2, wobei der Träger (14) eine zweite Wand (72a, 72b) umfasst, die in dem ersten Flutungsbereich (52) angeordnet ist, wobei zumindest ein Teil der ersten Wand (50) und der zweiten Wand (72a, 72b) einen dritten Flutungsbereich (74a, 74b) definieren, der vom ersten und zweiten Flutungsbereich (52, 54) getrennt ist, und wobei der dritte Flutungsbereich (74a, 74b) dazu geeignet ist, ungefilterte Abfallflüssigkeit aufzunehmen, die durch Überfluten der zweiten Wand (72a, 72b) vom ersten Flutungsbereich (52) kommt.

4. Filteranordnung (10) nach Anspruch 3, wobei der Träger (14) ein Schwimmelement (76) umfasst, das in dem dritten Flutungsbereich (74a, 74b) untergebracht ist.

5. Filteranordnung (10) nach Anspruch 4, wobei das Schwimmelement (76) dazu ausgelegt ist, angehoben zu werden, wenn vom ersten Flutungsbereich (52) kommende ungefilterte Abfallflüssigkeit die zweite Wand (72a, 72b) überflutet und den dritten Flutungsbereich (74a, 74b) füllt.

6. Filteranordnung (10) nach Anspruch 4 oder 5, wobei das Filtergehäuse (18) ein Fenster (82) umfasst, das dazu ausgelegt ist, das Schwimmelement (76) von außerhalb sichtbar zu machen, wenn es abgehoben wird, um einen Verstopfungszustand des Filterelements (12) anzuzeigen.

7. Filteranordnung (10) nach einem der Ansprüche 3 bis 6, wobei die erste Wand (50) einen ersten Überflutungsfüllstand (57) für die erste Wand (50) überflutende Abfallflüssigkeit definiert und die zweite Wand (72a, 72b) einen zweiten Überflutungsfüllstand (80) für die zweite Wand (72a, 72b) überflutende Abfallflüssigkeit definiert.

8. Filteranordnung (10) nach Anspruch 7, wobei der zweite Überflutungsfüllstand (80) niedriger ist als der erste Überflutungsfüllstand (57).

9. Filteranordnung (10) nach einem der Ansprüche 3 bis 8, wobei die erste Wand (50) mindestens eine Lüftungsöffnung (42) umfasst, durch welche ungefilterte Abfallflüssigkeit vom ersten Flutungsbereich (52) zum zweiten Flutungsbereich (54) strömen kann, bevor die Abfallflüssigkeit die erste Wand (50) und die zweite Wand (72a, 72b) überflutet.

10. Filteranordnung (10) nach Anspruch 8 und 9, wobei die mindestens eine Lüftungsöffnung (42) einen Lüftungsfüllstand (44) für die Abfallflüssigkeit definiert und wobei der Lüftungsfüllstand (44) niedriger ist als der zweite Überflutungsfüllstand (80).

11. Filteranordnung (10) nach einem der vorstehenden Ansprüche, wobei das Filterelement (12) und der Träger (14) lösbar miteinander gekoppelt sind.

12. Filteranordnung (10) nach einem der vorstehenden Ansprüche, wobei das Filtergehäuse (18) und der Träger (14) lösbar miteinander gekoppelt sind.

13. Filteranordnung (10) nach einem der vorstehenden Ansprüche, ferner umfassend eine Abdeckung (90), die dazu ausgelegt ist, mit dem Träger (14) gekoppelt zu sein, vorzugsweise dazu ausgelegt ist, fest mit dem Träger (14) gekoppelt zu sein.

14. Filteranordnung (10) nach einem der vorstehenden Ansprüche, wobei das Filterelement (12) ein Filtereinsatz ist.

15. Filteranordnung (10) nach einem der vorstehenden Ansprüche, wobei das Filterelement (12) rohrförmig ist und der ungefilterte Bereich (22) der Innenseite des Filterelements (12) entspricht und/oder das Filtergehäuse (18) rohrförmig ist und/oder die Auslasskammer (20) ring- und rohrförmig ist.

16. Filteranordnung (10) nach einem der vorstehenden Ansprüche, wobei der Einlass (24) zumindest teilweise im Träger (14) ausgeführt ist.

17. Filteranordnung (10) nach einem der vorstehenden Ansprüche, wobei der Einlass (24) dazu ausgelegt ist, mit einem Abflusskreislauf des Haushaltsgeräts verbunden zu sein, und/oder wobei der Auslass (26) dazu ausgelegt ist, mit einem am Aufstellort des Haushaltsgeräts außerhalb des Haushaltsgeräts angeordneten Abflusspunkt verbunden zu sein.

18. Filteranordnung (10) nach einem der vorstehenden Ansprüche, wobei das Haushaltsgerät eine Waschmaschine ist.

## Revendications

1. Ensemble à filtre (10) destiné à filtrer des déchets fluides déversés par un appareil ménager, ledit ensemble à filtre (10) comprenant :
- un élément filtre (12) définissant une zone non filtrée (22) recevant lesdits déchets fluides ;
- un boîtier de filtre (18) recevant ledit élément filtre (12), dans lequel une chambre de sortie (20) est définie entre ledit élément filtre (12) et ledit boîtier de filtre (18) pour recevoir un fluide passant à travers ledit élément filtre (12) et provenant de ladite zone non filtrée (22) ;
- un support (14) pour ledit élément filtre (12) ;
- une entrée (24) à travers laquelle lesdits déchets fluides sont fournis à ladite zone non filtrée (22) :
- une sortie (26) fluidiquement raccordée à ladite chambre de sortie (20), à travers laquelle les déchets fluides s'écoulent depuis ladite chambre de sortie (20) jusqu'à une d'évacuation ;
**caractérisé en ce que**
ledit support (14) comprend une première paroi (50) définissant une première zone de remplissement (52) et une deuxième zone de remplissement (54) séparée de ladite première zone de remplissement (52) par ladite première paroi (50) ;
dans lequel ladite première zone de remplissement (52) est fluidiquement raccordée à ladite zone non filtrée (22) par le biais d'une soupape (56) configurée pour permettre à des déchets fluides non filtrés de s'écouler depuis ladite zone non filtrée (22) jusqu'à ladite première zone de remplissement (52) ;
dans lequel ladite deuxième zone de remplissement (54) est appropriée pour recevoir des déchets fluides non filtrés provenant de ladite première zone de remplissement (52) en débordant par-dessus ladite première paroi (50) et dans lequel ladite deuxième zone de remplissement (54) comprend au moins une ouverture (58) configurée pour permettre à des déchets fluides non filtrés de s'écouler vers ladite sortie (26).

2. Ensemble à filtre (10) selon la revendication 1, dans lequel ladite au moins une ouverture (58) est réalisée entre ladite deuxième zone de remplissement (54) et ladite chambre de sortie (20).

3. Ensemble à filtre (10) selon la revendication 1 ou 2, dans lequel ledit support (14) comprend une seconde paroi (72a, 72b) agencée dans ladite première zone de remplissement (52), dans lequel au moins une partie de ladite première paroi (50) et ladite seconde paroi (72a, 72b) définissent une troisième zone de remplissement (74a, 74b) séparée desdites première et deuxième zones de remplissement (52, 54) et dans lequel ladite troisième zone de remplissement (74a, 74b) est appropriée pour recevoir des déchets fluides non filtrés provenant de ladite première zone de remplissement (52) en débordant par-dessus ladite seconde paroi (72a, 72b).

4. Ensemble à filtre (10) selon la revendication 3, dans lequel ledit support (14) comprend un élément flottant (76) logé dans ladite troisième zone de remplissement (74a, 74b).

5. Ensemble à filtre (10) selon la revendication 4, dans lequel ledit élément flottant (76) est configuré pour être levé lorsque des déchets fluides non filtrés provenant de ladite première zone de remplissement (52) débordent par-dessus ladite seconde paroi (72a, 72b) et remplissent ladite troisième zone de remplissement (74a, 74b) .

6. Ensemble à filtre (10) selon la revendication 4 ou 5, dans lequel ledit boîtier de filtre (18) comprend une fenêtre (82) configurée pour rendre ledit élément flottant (76) visible de l'extérieur, lorsqu'il est levé, afin d'indiquer une condition d'obstruction dudit élément filtre (12).

7. Ensemble à filtre (10) selon l'une quelconque des revendications 3 à 6, dans lequel ladite première paroi (50) définit un premier niveau de débordement (57) pour les déchets fluides qui débordent par-dessus ladite première paroi (50) et ladite seconde paroi (72a, 72b) définit un second niveau de débordement (80) pour les déchets fluides qui débordent par-dessus ladite seconde paroi (72a, 72b).

8. Ensemble à filtre (10) selon la revendication 7, dans lequel ledit second niveau de débordement (80) est plus bas que ledit premier niveau de débordement (57).

9. Ensemble à filtre (10) selon l'une quelconque des revendications 3 à 8, dans lequel ladite première paroi (50) comprend au moins une ouverture évent (42) à travers laquelle des déchets fluides non filtrés peuvent s'écouler depuis ladite première zone de remplissement (52) jusqu'à ladite deuxième zone de remplissement (54) avant que lesdits déchets fluides débordent par-dessus ladite première paroi (50) et ladite seconde paroi (72a, 72).

10. Ensemble à filtre (10) selon la revendication 8 et 9, dans lequel ladite au moins une ouverture évent (42) définit un niveau d'évent (44) pour les déchets fluides et dans lequel ledit niveau d'évent (44) est plus bas que ledit second niveau de débordement (80).

11. Ensemble à filtre (10) selon l'une quelconque des revendications précédentes, dans lequel ledit élément filtre (12) et ledit support (14) sont accouplés l'un à l'autre de façon amovible.

12. Ensemble à filtre (10) selon l'une quelconque des revendications précédentes, dans lequel ledit boîtier de filtre (18) et ledit support (14) sont accouplés l'un à l'autre de façon amovible.

13. Ensemble à filtre (10) selon l'une quelconque des revendications précédentes, comprenant en outre un couvercle (90) configuré pour être accouplé audit support (14), de préférence configuré pour être accouplé audit support (14) de façon fixe.

14. Ensemble à filtre (10) selon l'une quelconque des revendications précédentes, dans lequel ledit élément filtre (12) est une cartouche.

15. Ensemble à filtre (10) selon l'une quelconque des revendications précédentes, dans lequel ledit élément filtre (12) a une forme tubulaire et ladite zone non filtrée (22) correspond au côté intérieur dudit élément filtre (12) et/ou ledit boîtier de filtre (18) a une forme tubulaire et/ou ladite chambre de sortie (20) a une forme tubulaire annulaire.

16. Ensemble à filtre (10) selon l'une quelconque des revendications précédentes, dans lequel ladite entrée (24) est au moins partiellement réalisée dans ledit support (14).

17. Ensemble à filtre (10) selon l'une quelconque des revendications précédentes, dans lequel ladite entrée (24) est configurée pour être raccordée à un circuit d'évacuation dudit appareil ménager et/ou ladite sortie (26) est configurée pour être raccordée à un point d'évacuation agencé à l'extérieur dudit appareil ménager où l'appareil sera installé.

18. Ensemble à filtre (10) selon l'une quelconque des revendications précédentes, dans lequel ledit appareil ménager est une machine lave-linge.
